# EUROPEAN PATENT APPLICATION

(11) **EP 4 807 599 A1**
(43) Date of publication of application: **16.09.2026**
(21) Application number: 25162909.3
(22) Date of filing: 11.03.2025
(51) Int. Cl.: G06F 21/57, G06F 21/51, G06F 21/44

(54) **INFORMATION PROCESSING APPARATUS AND MONITORING METHOD FOR AN INFORMATION PROCESSING APPARATUS**

(71) Applicant: Toshiba TEC Kabushiki Kaisha, Tokyo 141-8562 (JP)
(72) Inventor: KOMATSUBARA, Yoshihiro, Shinagawa-ku, Tokyo, 141-8562 (JP)
(74) Representative: Hoffmann Eitle

(57) **Abstract**

In accordance with an embodiment, an information processing apparatus executes an determination operation of determining integrity of a program. In addition, the information processing apparatus determines integrity of a first program that is executed before activation of the determination operation in accordance with the activation of the determination operation and determines integrity of a second program in accordance with execution of the second program that is executed after activation of the determination operation.

## Description

### CROSS-REFERENCE TO RELATED APPLICATIONS

This application is based upon and claims the benefit of priority from the prior Japanese Patent Application No. 2024-2629, filed on January 11, 2024, the entire contents of which are incorporated herein by reference.

### FIELD

An embodiment described here generally relates to an information processing apparatus and a monitoring method for an information processing apparatus.

### BACKGROUND

Antimalware software to monitor program falsification includes a monitoring program using a white list. The white list is a list in which a pair of file path and hash value is stored for each program. When the monitoring program detects execution of a program, the monitoring program determines integrity of the program by using the white list.

However, some programs are activated earlier than the monitoring program. Therefore, with the monitoring program using the white list, it is difficult to monitor falsification in a program activated earlier than the monitoring program in some cases.

### SUMMARY OF THE INVENTION

One of the objects of the present invention is to improve prior art techniques and overcome at least some of the prior art problems as for instance above illustrated.

According to a fist aspect of the invention, it is provided an information processing apparatus, comprising: a determination processor that executes a determination operation of determining integrity of a program; and an output processor that outputs an alarm regarding the program that has failed the determination operation, wherein the determination processor includes a first determination processor that determines, in accordance with activation of the determination processor, integrity of a first program that is executed before activation of the determination processor, and a second determination processor that determines, in accordance with execution of a second program that is executed after activation of the determination processor, integrity of the second program.

Optionally, in the information processing apparatus according to the first aspect of the invention, the first program is a startup program that is executed in accordance with activation of the information processing apparatus.

Optionally, in the information processing apparatus according to the first aspect of the invention, the first determination processor determines the integrity of the first program while meeting a restriction regarding an activation time of the information processing apparatus.

Optionally, in the information processing apparatus according to the first aspect of the invention, the first determination processor determines the integrity of the first program on a basis of a first list, the first list including a plurality of entries to respectively store different pairs of file path and hash value.

Optionally, in the information processing apparatus according to the first aspect of the invention, the second determination processor determines the integrity of the second program on a basis of a second list different from the first list, the second list including a plurality of entries to respectively store different pairs of file path and hash value.

Optionally, in the information processing apparatus according to the first aspect of the invention, the first determination processor and the second determination processor each determines the integrity of the first program and the second program on a basis of a third list, the third list including a plurality of entries to respectively store pairs of file path and hash value.

Optionally, in the information processing apparatus according to the first aspect of the invention, the first determination processor determines the integrity of the first program on a basis of a first entry of the plurality of entries, the first entry storing an identical file path.

Optionally, in the information processing apparatus according to the first aspect of the invention, the second determination processor determines the integrity of the second program on a basis of a second entry of the plurality of entries, the second entry storing different file paths.

According to a second aspect of the invention, it is provided a monitoring method for an information processing apparatus, comprising executing a determination operation of determining integrity of a program; and outputting an alarm regarding a program that has failed the determination operation, wherein the determination operation includes executing, in accordance with activation of the determination operation, first determination to determine integrity of a first program that is executed before activation of the determination operation, and executing, in accordance with execution of a second program that is executed after activation of the determination processor, second determination to determine integrity of the second program.

Optionally, in the monitoring method for an information apparatus according to the second aspect of the invention, the first program is a startup program that is executed in accordance with activation of the information processing apparatus, and the first determination includes determining the integrity of the first program while meeting a restriction regarding an activation time of the information processing apparatus.

### BRIEF DESCRIPTION OF THE DRAWINGS

Fig. 1 is a block diagram showing an example of a hardware configuration of an information processing apparatus according to an embodiment.
Fig. 2 is a block diagram showing an example of a functional configuration of the information processing apparatus according to the embodiment.
Fig. 3 is a diagram showing an example of a data structure of a first list according to the embodiment.
Fig. 4 is a diagram showing an example of a data structure of a second list according to the embodiment.
Fig. 5 is a flowchart showing an example of monitoring processing in the information processing apparatus according to the embodiment.
Fig. 6 is a flowchart showing an example of first determination processing in the information processing apparatus according to the embodiment.
Fig. 7 is a flowchart showing an example of second determination processing in the information processing apparatus according to the embodiment.
Fig. 8 is a block diagram showing an example of a functional configuration of an information processing apparatus according to a modified example.
Fig. 9 is a diagram showing an example of a data structure of a third list according to the modified example.
Fig. 10 is a flowchart showing an example of the first determination processing in the information processing apparatus according to the modified example.

### DETAILED DESCRIPTION

In accordance with an embodiment, a determination processor and an output processor are provided. The determination processor executes a determination operation of determining integrity of a program. The output processor outputs an alarm regarding the program that has failed the determination operation. In addition, the determination processor includes a first processor and a second processor. The first determination processor determines, in accordance with activation of the determination processor, integrity of a first program that is executed before activation of the determination processor. The second determination processor determines, in accordance with execution of a second program that is executed after activation of the determination processor, integrity of the second program.

Hereinafter, the information processing apparatus according to the embodiment will be described with reference to the drawings. In the drawings, the same reference signs denote the same or similar parts.

### 1. Embodiment

The information processing apparatus according to the embodiment is a computer that has security requirements for integrity of a program and a peripheral equipment thereof. Specifically, for example, the information processing apparatus according to the embodiment is a multifunction peripheral (MFP). Moreover, for example, the information processing apparatus according to the embodiment may be office equipment such as a point of sale (POS) terminal.

### 1.1 Configuration

First of all, a configuration of the information processing apparatus according to the embodiment will be described.

### 1.1.1 Hardware Configuration

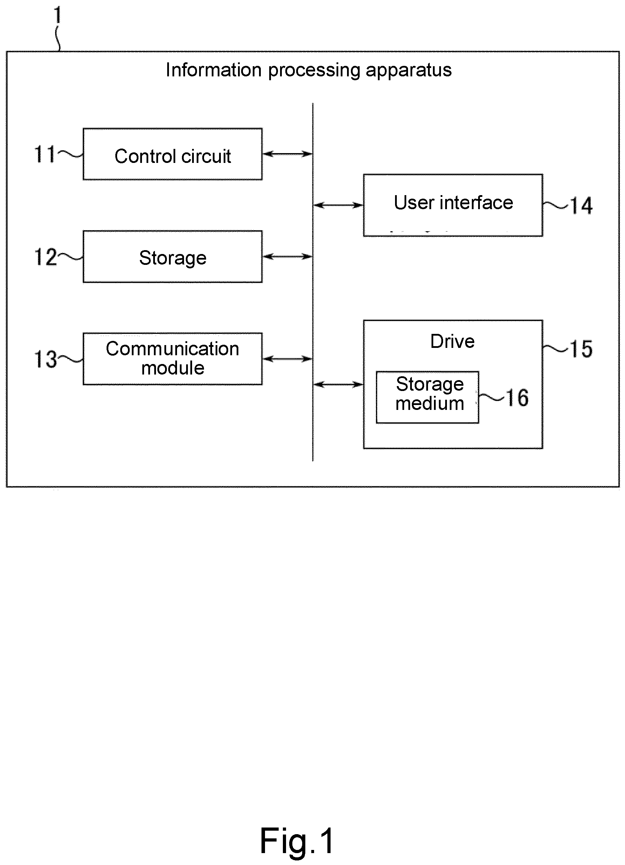

Fig. 1 is a diagram showing an example of a hardware configuration of the information processing apparatus according to the embodiment. As shown in Fig. 1, an information processing apparatus 1 includes a control circuit 11, storage 12, a communication module 13, a user interface 14, a drive 15, and a storage medium 16.

The control circuit 11 is a circuit that comprehensively controls components of the information processing apparatus 1. The control circuit 11 includes a processor, a memory, etc. The processor is, for example, a central processing unit (CPU). The memory includes, for example, a random access memory (RAM), a read only memory (ROM), etc. The CPU of the control circuit 11 controls the entire information processing apparatus 1 in accordance with a program stored in the ROM of the control circuit 11. The RAM of the control circuit 11 has a working area for the CPU of the control circuit 11. The ROM of the control circuit 11 stores a program (monitoring program) and the like used by the information processing apparatus 1 for monitoring processing. The monitoring processing is processing of monitoring whether or not there is falsification in a program to be monitored. The monitoring processing includes first determination processing and second determination processing. The monitoring processing will be described later in detail.

The storage 12 includes, for example, a hard disk drive (HDD) or a solid state drive (SSD). The storage 12 stores information used for monitoring processing in the information processing apparatus 1.

The communication module 13 is a circuit used for data transmission/reception between the information processing apparatus 1 and a network (not shown).

The user interface 14 is an apparatus for communication between the information processing apparatus 1 and a user. The user interface 14 includes an input apparatus and an output apparatus. The input apparatus includes, for example, a touch panel, an operation button, etc. The output apparatus includes, for example, a printer, a loudspeaker, a display, etc. In a case where the information processing apparatus 1 is an MFP, the output apparatus may be, for example, an operation panel forming a part of the printer.

The drive 15 is an apparatus for reading software stored in the storage medium 16. The drive 15 includes, for example, a compact disk (CD) drive or a digital versatile disk (DVD) drive.

The storage medium 16 is a medium for storing the software by an electrical, magnetic, optical, mechanical, or chemical action. The storage medium 16 may store the monitoring program.

### 1.1.2 Functional Configuration

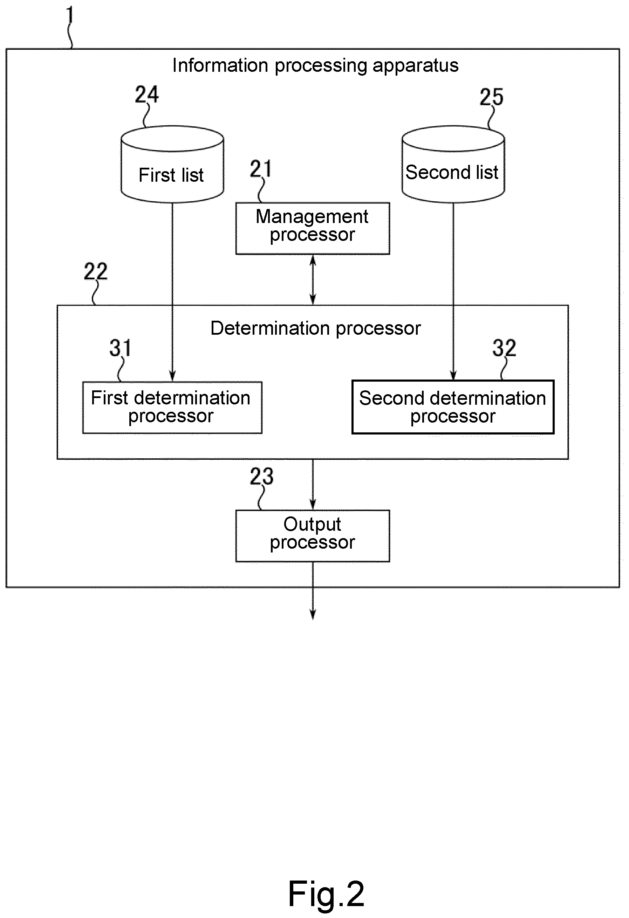

Fig. 2 is a block diagram showing an example of a functional configuration of the information processing apparatus according to the embodiment.

As shown in Fig. 2, the CPU of the control circuit 11 deploys the program stored in the ROM of the control circuit 11 or the storage medium 16 to the RAM of the control circuit 11. Then, the CPU of the control circuit 11 interprets and executes the program deployed in the RAM of the control circuit 11. Accordingly, the information processing apparatus 1 functions as a computer including a management processor 21, a determination processor 22, and an output processor 23. Moreover, the information processing apparatus 1 stores a first list 24 and a second list 25 in the storage 12.

The management processor 21 is a functional block that manages execution of various programs. The management processor 21 activates a startup program and the monitoring program in accordance with activation (powering-on) of the information processing apparatus 1. The startup program includes an already executed program and a currently executed program with respect to the time of activating the monitoring program. Moreover, the management processor 21 executes a dedicated program after activation of the information processing apparatus 1. In a case where the information processing apparatus 1 is an MFP, the dedicated program is, for example, a program for the information processing apparatus 1 to function as the MFP. The dedicated program is a program scheduled to be executed with respect to the time of activating the monitoring program. The number of dedicated programs can be significantly larger than the number of startup programs.

The management processor 21 notifies the determination processor 22 of the start of executing a program to be monitored. When the management processor 21 receives a notice indicating that there is a possibility of falsification in a currently executed program of programs to be monitored from the determination processor 22, the management processor 21 stops the program. When the management processor 21 receives the notice indicating that there is a possibility of falsification in a program scheduled to be executed of the programs to be monitored, the management processor 21 rejects execution of the program from the determination processor 22.

The determination processor 22 is a functional block that executes the monitoring processing. The determination processor 22 determines integrity of the program to be monitored in the monitoring processing. Specifically, the determination processor 22 includes a first determination processor 31 and a second determination processor 32.

The first determination processor 31 is a functional block that executes first determination processing on the basis of the first list 24. The first determination processing is processing of determining integrity of a startup program of the programs to be monitored.

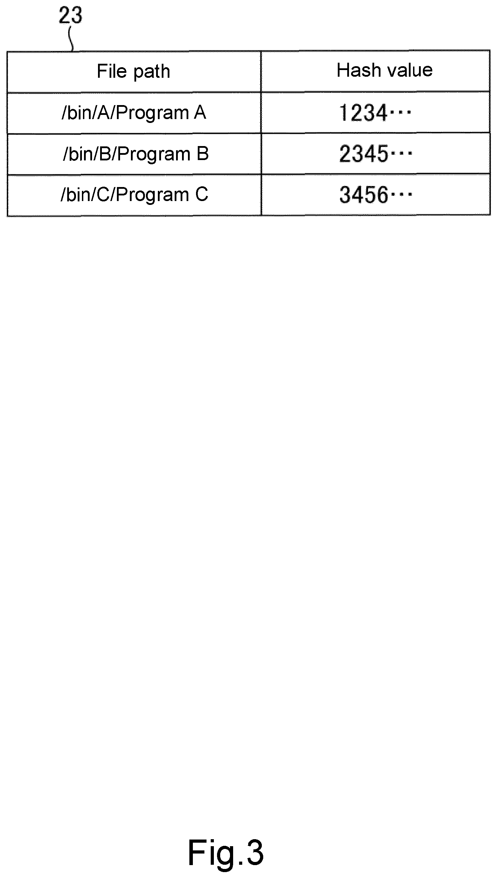

Fig. 3 is a diagram showing an example of a data structure of the first list according to the embodiment.

As shown in Fig. 3, the first list 24 is a white list corresponding to startup programs to be monitored. The first list 24 includes a plurality of entries respectively corresponding to the startup programs to be monitored. Each of the plurality of entries stores a pair of file path and hash value of the corresponding startup program to be monitored.

In the example in Fig. 3, the entry in the first line from above indicates that the file path and hash value of a program A are "/bin/A" and "1234...," respectively. The entry in the second line from above indicates that the file path and hash value of a program B are "/bin/B" and "2345...," respectively. The entry in the third line from above indicates that the file path and hash value of a program C are "/bin/C" and "3456...," respectively.

In a case where it is determined that there is a possibility of falsification in the startup program to be monitored, the first determination processor 31 sends to the output processor 23 a notice indicating that there is a possibility of falsification. Moreover, in a case where it is determined that there is a possibility of falsification in a currently executed program of the startup programs to be monitored, the first determination processor 31 further sends to the management processor 21 the notice indicating that there is a possibility of falsification.

The second determination processor 32 is a functional block that executes the second determination processing on the basis of the second list 25. The second determination processing is processing of determining whether or not there is a possibility of falsification in a dedicated program of the programs to be monitored.

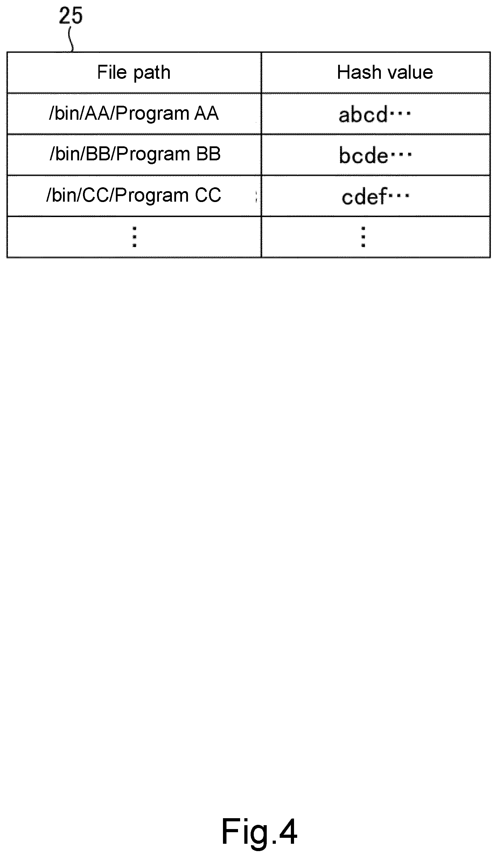

Fig. 4 is a diagram showing an example of a data structure of the second list according to the embodiment.

As shown in Fig. 4, the second list 25 is a white list corresponding to dedicated programs to be monitored. The second list 25 includes a plurality of entries respectively corresponding to the dedicated programs to be monitored. Each of the plurality of entries stores a pair of file path and hash value of the corresponding dedicated program to be monitored.

In the example in Fig. 4, the entry in the first line from above indicates that the file path and hash value of a program AA are "/bin/AA" and "abcd...," respectively. The entry in the second line from above indicates that the file path and hash value of a program BB are "/bin/BB" and "bcde...," respectively. The entry in the third line from above indicates that the file path and hash value of a program CC are "/bin/CC" and "cdef...," respectively.

In a case where it is determined that there is a possibility of falsification in the dedicated programs to be monitored, the second determination processor 32 sends to the output processor 23 and the management processor 21 the notice indicating that there is a possibility of falsification.

When the output processor 23 receives the notice indicating that there is a possibility of falsification in the program to be monitored (i.e., a notice indicating that it has failed the determination processing) from the determination processor 22, the output processor 23 outputs an alarm including information indicating that there is a possibility of falsification to the user via the user interface 14. In a case where the information processing apparatus 1 is an MFP, the output processor 23 displays, for example, an alarm on the operation panel of the printer. The output processor 23 may output an alarm sound in connection with the display of the alarm.

### 1.2 Operation

Next, an operation of the information processing apparatus according to the embodiment will be described.

### 1.2.1 Monitoring Processing

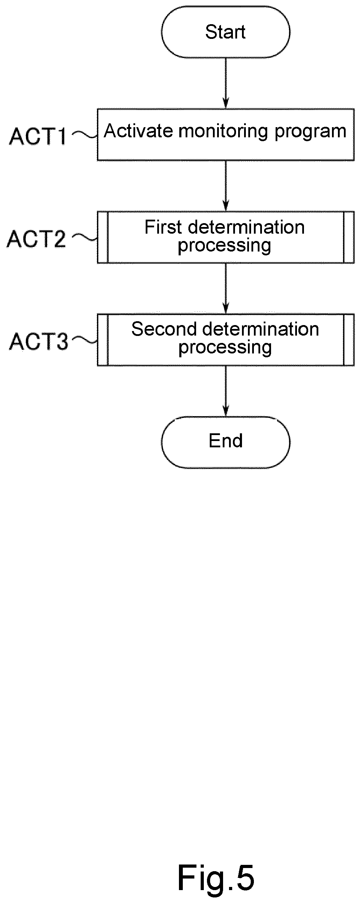

Fig. 5 is a flowchart showing an example of monitoring processing in the information processing apparatus according to the embodiment. Fig. 5 shows the overview of processing for monitoring falsification in a program after the information processing apparatus 1 is powered on.

When the information processing apparatus 1 is powered on (start), the management processor 21 executes the startup program to start the information processing apparatus 1. Moreover, the management processor 21 further activates the monitoring program (ACT 1). After activation of the monitoring program, the startup program can include both the already executed program and the currently executed program.

After the processing in ACT 1, the first determination processor 31 executes the first determination processing (ACT 2). The first determination processor 31 executes the first determination processing in ACT 2 in a predetermined time. The predetermined time is an upper limit value of the time required for activating the information processing apparatus 1 and is, for example, a value defined as a specification of the information processing apparatus 1. That is, the first determination processor 31 executes the first determination processing while meeting a restriction regarding the activation time of the information processing apparatus 1.

After the processing in ACT 2, the second determination processor 32 executes the second determination processing along with the start of executing the dedicated program (ACT 3). The second determination processor 32 executes the second determination processing after the startup of the information processing apparatus 1 is completed.

When the second determination processing in ACT 3 ends, the monitoring processing ends (end).

### 1.2.2 First Determination Processing

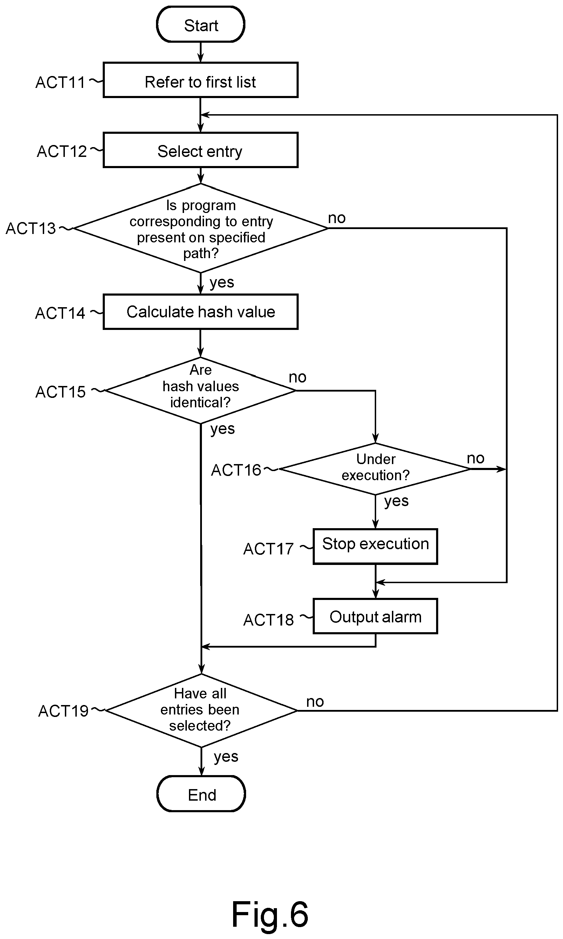

Fig. 6 is a flowchart showing an example of the first determination processing in the information processing apparatus according to the embodiment. The processing in ACT 11 to ACT 19 shown in Fig. 6 corresponds to the processing in ACT 2 in Fig. 5.

When the monitoring program is activated (start), the first determination processor 31 refers to the first list 24 (ACT 11).

The first determination processor 31 selects an entry from the first list 24 (ACT 12).

The first determination processor 31 determines whether or not a program corresponding to an entry is present on a file path (specified path) specified by the entry (selected entry) selected in the processing in ACT 12 (ACT 13).

In a case where the program corresponding to the selected entry is present on the specified path (Yes in ACT 13), the first determination processor 31 calculates a hash value of the program corresponding to the selected entry (ACT 14).

The first determination processor 31 determines whether or not the hash value calculated in the processing in ACT 14 is identical to the hash value stored in the selected entry (ACT 15).

In a case where the hash value calculated in the processing in ACT 14 is not identical to the hash value stored in the selected entry (No in ACT 15), the first determination processor 31 determines whether or not the program corresponding to the selected entry is under execution (ACT 16).

In a case where the program corresponding to the selected entry is under execution (Yes in ACT 16), the first determination processor 31 notifies the management processor 21 of the fact that there is a possibility of falsification in the program corresponding to the selected entry.

When the management processor 21 receives the notice indicating that there is a possibility of falsification, the management processor 21 stops the execution of the program corresponding to the selected entry (ACT 17).

In a case where no program corresponding to the selected entry is present on the specified path (No in ACT 13), in a case where the program corresponding to the selected entry is not under execution (No in ACT 16) or after the processing in ACT 17, the first determination processor 31 further notifies the output processor 23 of the fact that there is a possibility of falsification in the program corresponding to the selected entry.

When the output processor 23 receives the notice indicating that there is a possibility of falsification, the output processor 23 outputs an alarm regarding the program corresponding to the selected entry to the user (ACT 18). More specifically, in a case where no program corresponding to the selected entry is present on the specified path (No in ACT 13), the output processor 23 displays an alarm screen indicating that no startup program is present on the display or the operation panel. In a case where the program corresponding to the selected entry is not under execution (No in ACT 16) or after the processing in ACT 17 (i.e., in a case of no in ACT 15), the output processor 23 outputs an alarm indicating that there is a possibility of falsification in the program corresponding to the selected entry to the user.

In a case where the hash value calculated in the processing in ACT 14 is identical to the hash value stored in the selected entry (Yes in ACT 15) or after the processing in ACT 18, the first determination processor 31 determines whether or not all entries in the first list 24 have been selected (ACT 19).

In a case where an entry has not been selected in the first list 24 (No in ACT 19), the first determination processor 31 selects the not-selected entry from the first list 24 (ACT 12). Then, the first determination processor 31, the management processor 21, and the output processor 23 execute the subsequent processing in ACT 13 to ACT 19. In this manner, the first determination processor 31, the management processor 21, and the output processor 23 repeat the processing in ACT 12 to ACT 19 until all entries in the first list 24 are selected.

In a case where all entries in the first list 24 are selected (Yes in ACT 19), the first determination processing ends (end).

### 1.2.3 Second Determination Processing

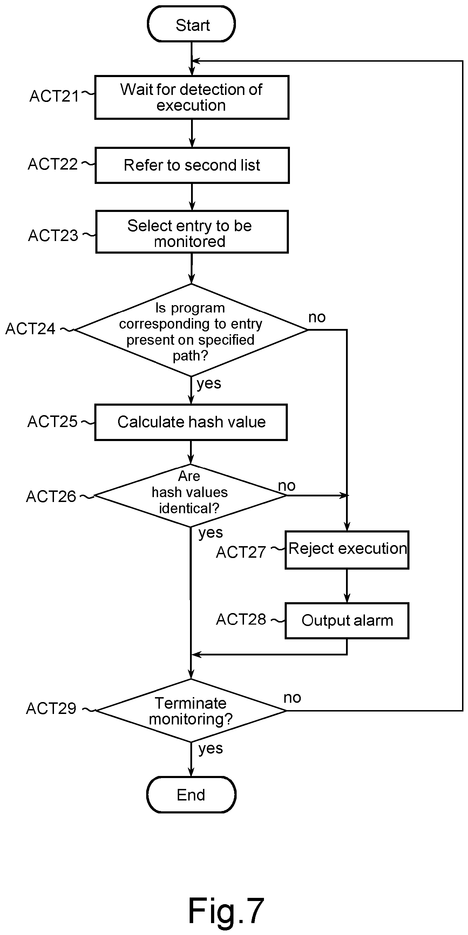

Fig. 7 is a flowchart showing an example of the second determination processing in the information processing apparatus according to the embodiment. The processing in ACT 21 to ACT 29 shown in Fig. 7 corresponds to the processing in ACT 3 in Fig. 5.

When the first determination processing ends (start), the second determination processor 32 waits for the management processor 21 to detect the start of executing the dedicated program (ACT 21).

When the management processor 21 detects the start of executing the dedicated program, the management processor 21 notifies the second determination processor 32 of the dedicated program scheduled to start to be executed as a program to be monitored.

When the second determination processor 32 receives the notice about the program to be monitored, the second determination processor 32 refers to the second list 25 (ACT 22).

The second determination processor 32 selects, from the second list 25, an entry (entry to be monitored) corresponding to the program to be monitored about which the second determination processor 32 has received the notice (ACT 23).

The second determination processor 32 determines whether or not the program to be monitored is present on the file path (specified path) specified by the entry to be monitored (ACT 24).

In a case where the program to be monitored is present on the specified path (Yes in ACT 24), the second determination processor 32 calculates a hash value of the program to be monitored (ACT 25).

The second determination processor 32 determines whether or not the hash value calculated in the processing in ACT 25 is identical to the hash value stored in the entry to be monitored (ACT 26).

In a case where the program to be monitored is not present on the specified path (No in ACT 24) or in a case where the hash value calculated in the processing in ACT 26 is not identical to the hash value stored in the entry to be monitored (No in ACT 26), the second determination processor 32 notifies the management processor 21 of the fact that there is a possibility of falsification in the program to be monitored.

When the management processor 21 receives the notice indicating that there is a possibility of falsification, the management processor 21 rejects execution of the program to be monitored (ACT 27).

After the processing in ACT 27, the second determination processor 32 further notifies the output processor 23 of the fact that there is a possibility of falsification in the program to be monitored.

When the output processor 23 receives the notice indicating that there is a possibility of falsification, the output processor 23 outputs an alarm regarding the program to be monitored to the user (ACT 28). More specifically, in a case where the program to be monitored is not present on the specified path (No in ACT 24), the output processor 23 displays an alarm screen indicating that no dedicated program is present on the display or the operation panel. In a case where the hash value calculated in the processing in ACT 26 is not identical to the hash value stored in the entry to be monitored (No in ACT 26), the output processor 23 outputs an alarm indicating that there is a possibility of falsification in the program to be monitored to the user.

In a case where the hash value calculated in the processing in ACT 26 is identical to the hash value stored in the entry to be monitored (Yes in ACT 26) or after the processing in ACT 28, the second determination processor 32 determines whether or not to terminate the monitoring by the second determination processing (ACT 29).

In a case where the monitoring by the second determination processing should be continued (No in ACT 29), the second determination processor 32 waits for the management processor 21 to detect the start of executing the dedicated program (ACT 21). Then, the second determination processor 32, the management processor 21, and the output processor 23 execute the subsequent processing in ACT 22 to ACT 29. In this manner, the second determination processor 32, the management processor 21, and the output processor 23 repeat the processing in ACT 21 to ACT 29 until the monitoring by the second determination processing ends.

In a case where the monitoring by the second determination processing should be terminated (Yes in ACT 29), the second determination processing ends (end).

### 1.3 Effects According to Embodiment

According to the embodiment, the first determination processor 31 executes the first determination processing of determining integrity of the startup program executed before activation of the monitoring program, referring to the first list 24 in accordance with the activation of the monitoring program. Accordingly, it is possible to monitor whether or not there is falsification in all programs that can be executed before activation of the monitoring program. It should be noted that the first determination processor 31 executes the first determination processing in a restriction that is the activation time of the information processing apparatus 1. Therefore, it is possible to make a rapid determination of the integrity of the startup program while meeting requirements for the activation time of the information processing apparatus 1.

Moreover, the second determination processor 32 executes the second determination processing of determining the integrity of the dedicated program every time in accordance with execution of the dedicated program executed after activation of the monitoring program, referring to the second list 25. Accordingly, as for the program executed after activation of the monitoring program, it is possible to monitor whether or not there is falsification for each program at a timing at which the execution should be performed. Therefore, it is no longer necessary to determine all programs in the second list 25 at once, and it is possible to distribute the load of the determination processing.

### 2. Modified Examples

Various variants can be applied to the above-mentioned embodiment.

In the above-mentioned embodiment, the case where the determination processor 22 executes each of the first determination processing and the second determination processing on the basis of the first list 24 and the second list 25 different from each other has been described, though not limited thereto. For example, the determination processor 22 may execute the first determination processing and the second determination processing on the basis of the same list.

Hereinafter, configurations and operations different from those of the embodiment will be mainly described. Descriptions of configurations and operations equivalent to those of the embodiment will be omitted as appropriate.

### 2.1 Configuration

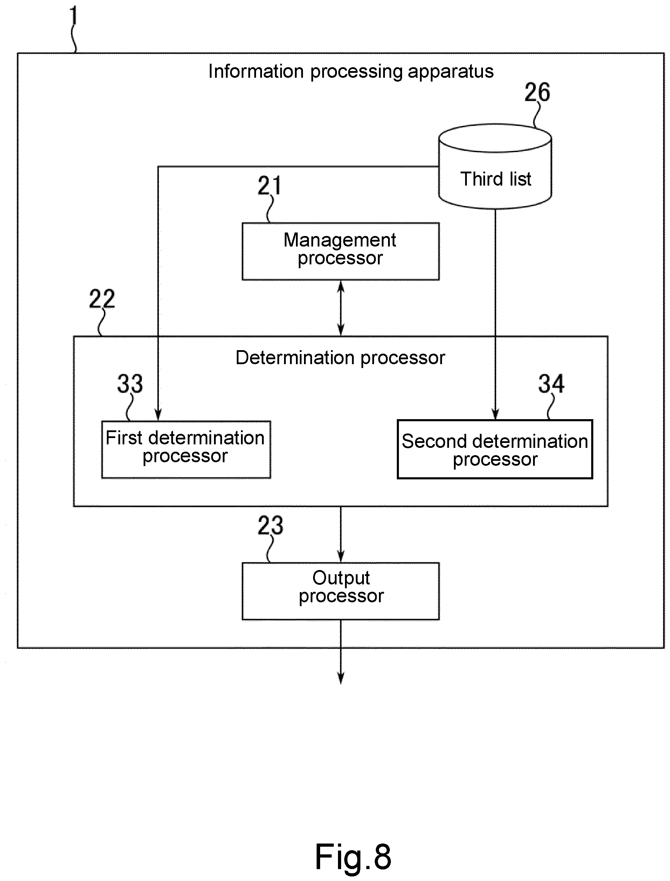

Fig. 8 is a block diagram showing an example of a functional configuration of an information processing apparatus according to a modified example. Fig. 8 corresponds to Fig. 2 in the embodiment. As shown in Fig. 8, the information processing apparatus 1 stores a third list 26 in the storage 12. The determination processor 22 includes a first determination processor 33 and a second determination processor 34.

The first determination processor 33 is a functional block that executes the first determination processing on the basis of the third list 26. In a case where it is determined that there is a possibility of falsification in the startup program to be monitored, the first determination processor 33 sends to the output processor 23 a notice indicating that there is a possibility of falsification. Moreover, in a case where it is determined that there is a possibility of falsification in the currently executed program of the startup programs to be monitored, the first determination processor 33 further sends to the management processor 21 the notice indicating that there is a possibility of falsification.

The second determination processor 34 is a functional block that executes the second determination processing on the basis of the third list 26. In a case where it is determined that there is a possibility of falsification in the dedicated programs to be monitored, the second determination processor 32 sends to the output processor 23 and the management processor 21 the notice indicating that there is a possibility of falsification.

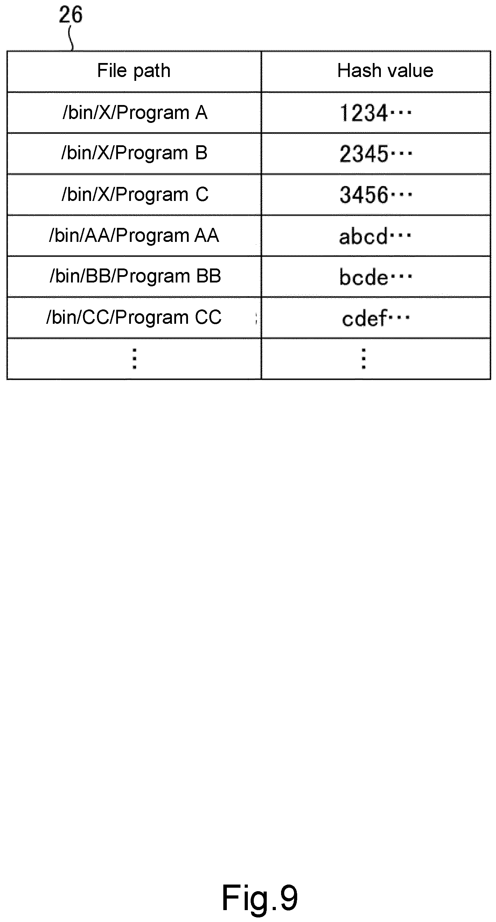

Fig. 9 is a diagram showing an example of a data structure of the third list according to the modified example.

As shown in Fig. 9, the third list 26 is a white list corresponding to all programs to be monitored. The third list 26 includes a plurality of entries respectively corresponding to the programs to be monitored. Each of the plurality of entries stores a pair of file path and hash value of the corresponding program to be monitored. It is assumed that all startup programs to be monitored in the first determination processing out of the plurality of entries are arranged on the same predetermined file path. Moreover, it is assumed that all dedicated programs to be monitored in the second determination processing out of the plurality of entries are arranged on file paths different from the predetermined file path on which the startup programs are arranged.

In the example in Fig. 9, the entry in the first line from above indicates that the file path and the hash value of the program A are "/bin/X" and "1234...," respectively. The entry in the second line from above indicates that the file path and the hash value of the program B are "/bin/X" and "2345...," respectively. The entry in the third line from above indicates that the file path and the hash value of the program C are "/bin/X" and "3456...," respectively. Moreover, the entry in the fourth line from above indicates that the file path and the hash value of the program AA are "/bin/AA" and "abcd...," respectively. The entry in the fifth line from above indicates that the file path and the hash value of the program BB are "/bin/BB" and "bcde...," respectively. The entry in the sixth line from above indicates that the file path and the hash value of the program CC are "/bin/CC" and "cdef...," respectively. Provided that the file path "/bin/X" is the predetermined file path, the programs A to C are startup programs to be monitored in the first determination processing. Moreover, the programs AA to CC are dedicated programs to be monitored in the second determination processing.

### 2.2 Operation

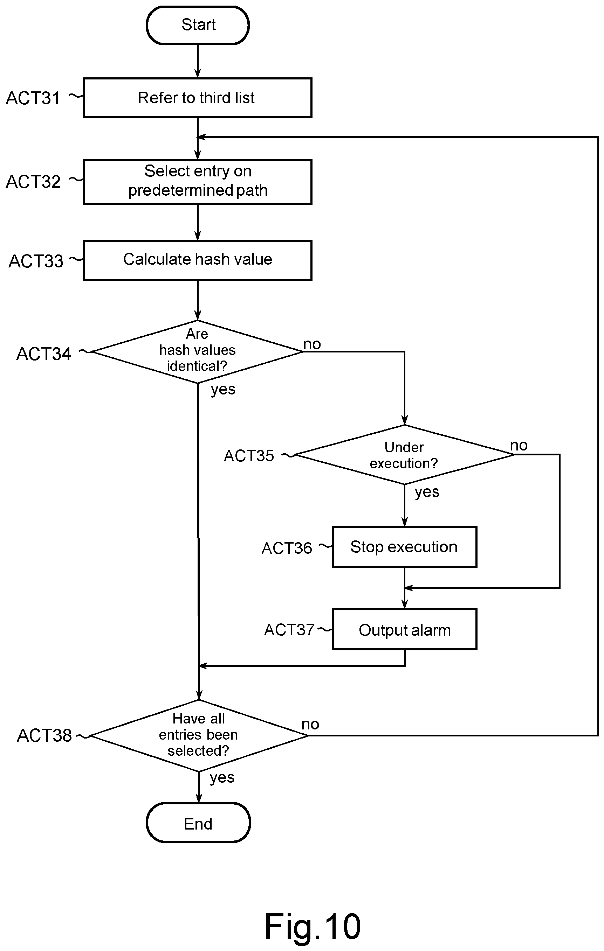

Fig. 10 is a flowchart showing an example of the first determination processing in the information processing apparatus according to the modified example. Fig. 10 corresponds to Fig. 6 in the embodiment. That is, the processing in ACT 31 to ACT 38 shown in Fig. 10 correspond to the processing in ACT 2 in Fig. 5.

When the monitoring program is activated (start), the first determination processor 33 refers to the third list 26 (ACT 31).

The first determination processor 33 selects an entry specifying the predetermined file path from the third list 26 (ACT 32). The predetermined file path is "/bin/X" in the example in Fig. 9.

The first determination processor 33 calculates a hash value of a program corresponding to the entry (selected entry) selected in the processing in ACT 32 (ACT 33).

The first determination processor 33 determines whether or not the hash value calculated in the processing in ACT 33 is identical to the hash value stored in the selected entry (ACT 34).

In a case where the hash value calculated in the processing in ACT 33 is not identical to the hash value stored in the selected entry (No in ACT 34), the first determination processor 33 determines whether or not the program corresponding to the selected entry is under execution (ACT 35).

In a case where the program corresponding to the selected entry is under execution (Yes in ACT 35), the first determination processor 33 notifies the management processor 21 of the fact that there is a possibility of falsification in the program corresponding to the selected entry.

When the management processor 21 receives the notice indicating that there is a possibility of falsification, the management processor 21 stops the execution of the program corresponding to the selected entry (ACT 36).

In a case where the program corresponding to the selected entry is not under execution (No in ACT 35) or after the processing in ACT 36, the first determination processor 33 further notifies the output processor 23 of the fact that there is a possibility of falsification in the program corresponding to the selected entry.

When the output processor 23 receives the notice indicating that there is a possibility of falsification, the output processor 23 outputs an alarm regarding the program corresponding to the selected entry to the user (ACT 37). More specifically, in a case where the program corresponding to the selected entry is not under execution (No in ACT 35) or after the processing in ACT 36 (i.e., in a case of no in ACT 34), the output processor 23 outputs an alarm indicating that there is a possibility of falsification in the program corresponding to the selected entry to the user.

In a case where the hash value calculated in the processing in ACT 33 is identical to the hash value stored in the selected entry (Yes in ACT 34) or after the processing in ACT 37, the first determination processor 33 determines whether or not all entries corresponding to the predetermined file path in the third list 26 have been selected (ACT 38).

In a case where there is an entry corresponding to the predetermined file path in the third list 26, which has not been selected (No in ACT 38), the first determination processor 33 selects the not-selected entry from the third list 26 (ACT 32). Then, the first determination processor 33, the management processor 21, and the output processor 23 execute the subsequent processing in ACT 33 to ACT 38. In this manner, the first determination processor 33, the management processor 21, and the output processor 23 repeat the processing in ACT 32 to ACT 39 until all entries corresponding to the predetermined file path in the third list 26 are selected.

In a case where all entries corresponding to the predetermined file path in the third list 26 have been selected (Yes in ACT 38), the first determination processing ends (end).

### 2.3 Effects According to Modified Example

According to the modified example, the first determination processor 33 executes the first determination processing on all programs in the predetermined path, referring to the predetermined path in the third list 26. The second determination processor 34 executes the second determination processing of determining the integrity of the dedicated program every time in accordance with execution of the dedicated program executed after activation of the monitoring program, referring to the third list 26. Accordingly, it is possible to execute processing equivalent to that of the embodiment without having two or more types of lists storing the pairs of the file path and the hash value. Therefore, it is no longer necessary to manage a plurality of types of data structures for the security and it is possible to reduce the security management cost.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing apparatus, comprising:
a determination processor that executes a determination operation of determining integrity of a program; and
an output processor that outputs an alarm regarding the program that has failed the determination operation, wherein
the determination processor includes
a first determination processor that determines, in accordance with activation of the determination processor, integrity of a first program that is executed before activation of the determination processor, and
a second determination processor that determines, in accordance with execution of a second program that is executed after activation of the determination processor, integrity of the second program.

2. The information processing apparatus according to claim 1, wherein
the first program is a startup program that is executed in accordance with activation of the information processing apparatus.

3. The information processing apparatus according to claim 2, wherein
the first determination processor determines the integrity of the first program while meeting a restriction regarding an activation time of the information processing apparatus.

4. The information processing apparatus according to any of claims 1 to 3, wherein
the first determination processor determines the integrity of the first program on a basis of a first list, the first list including a plurality of entries to respectively store different pairs of file path and hash value.

5. The information processing apparatus according to claim 4, wherein
the second determination processor determines the integrity of the second program on a basis of a second list different from the first list, the second list including a plurality of entries to respectively store different pairs of file path and hash value.

6. The information processing apparatus according to any of claims 1 to 5, wherein
the first determination processor and the second determination processor each determines the integrity of the first program and the second program on a basis of a third list, the third list including a plurality of entries to respectively store pairs of file path and hash value.

7. The information processing apparatus according to claim 6, wherein
the first determination processor determines the integrity of the first program on a basis of a first entry of the plurality of entries, the first entry storing an identical file path.

8. The information processing apparatus according to claim 7, wherein
the second determination processor determines the integrity of the second program on a basis of a second entry of the plurality of entries, the second entry storing different file paths.

9. A monitoring method for an information processing apparatus, comprising:
executing a determination operation of determining integrity of a program; and
outputting an alarm regarding a program that has failed the determination operation, wherein
the determination operation includes
executing, in accordance with activation of the determination operation, first determination to determine integrity of a first program that is executed before activation of the determination operation, and
executing, in accordance with execution of a second program that is executed after activation of the determination processor, second determination to determine integrity of the second program.

10. The monitoring method for an information processing apparatus according to claim 9, wherein
the first program is a startup program that is executed in accordance with activation of the information processing apparatus, and
the first determination includes determining the integrity of the first program while meeting a restriction regarding an activation time of the information processing apparatus.
